# EUROPEAN PATENT SPECIFICATION

(11) **EP 3 098 443 B1**
(45) Date of publication and mention of the grant of the patent: **31.07.2019**
(21) Application number: 15169200.1
(22) Date of filing: 26.05.2015
(51) Int. Cl.: F03D 1/00

(54) **COUPLING ARRANGEMENT IN THE FIELD OF WIND TURBINES**
KUPPLUNGSANORDNUNG AUF DEM GEBIET VON WINDTURBINEN
AGENCEMENT DE COUPLAGE DANS UN CHAMP D'ÉOLIENNES

(43) Date of publication of application: 30.11.2016
(73) Proprietor: Siemens Gamesa Renewable Energy A/S, 7330 Brande (DK)
(72) Inventor: Moeller, Jesper, 7330 Brande (DK); Svinth, Kenneth Helligsoe, 8000 Aarhus C (DK)
(74) Representative: Aspacher, Karl-Georg

(56) References cited:
- EP-A2- 2 461 021
- US-B1- 6 408 575

## Description

The present invention relates to a coupling arrangement in the field of wind turbines, to a wind turbine and to a method for assembling said coupling arrangement.

Wind turbines are manufactured and transported in parts. The parts are connected at the installation site of the wind turbine. For example, the tower is erected and connected to the foundation, the nacelle is attached to the tower, the tower is connected to the nacelle and the rotor blades are attached to the tower.

Installation of wind turbines involves mounting of large components, in particular a nacelle to a tower, in hazardous environments, e.g. far out at sea. The nacelle is lifted by a crane and is arranged on top of the tower. The position of the nacelle needs to be adjusted in respect to the tower to connect the nacelle to the tower. Personnel is present in the upper part of the tower to guide the nacelle into the right position to be connected and to connect the nacelle to the tower.

The connection is established by bolts. The tower comprises a flange in the area of the upper end of the tower. The flange comprises holes to interact with bolts. The nacelle is connected to the tower by a number of bolts. Until the connection is established the nacelle is secured by the crane.

EP 2 461 021 A2 describes a wind power generator whose yaw bearing can be replaced. The wind power generator has a nacelle and a tower that supports the nacelle. The nacelle and the tower are connected by bolts.

The presence of personnel in the upper part of the tower during the approach and adjustment of the nacelle is dangerous, as they are in the area of heavy moving loads. In the case of a problem during the installation of the nacelle, due to increasing wind for example, an accident might occur and people might get injured.

Also in some countries compliance with work safety regulations may demand absence of technical personnel in the tower while hoisting and lowering the nacelle to the tower.

It is thus one object of the present invention to improve work safety during installation of wind turbines.

The object of the invention is achieved by the independent claim 1. Further features of the invention are disclosed in the dependant claims.

According to a first aspect, a coupling arrangement in the field of wind turbines is provided. The arrangement comprises a nacelle having a plurality of bolts, a tower having a plurality of bolt holes, the bolts being insertable in the bolt holes by moving the nacelle and the tower towards each other in a mounting direction, and locking means for locking the nacelle to the tower in a direction opposite to the mounting direction.

Advantageously, no technical personnel is needed in a nacelle during provisional fastening of the nacelle, thus improving work safety during installation of wind turbines.

A wind turbine is a wind-driven generator for generating electricity.

A tower is bearing the nacelle of the wind turbine that is connected to the tower by bolts. A bolt may be a threaded heavy-duty metal pin. The bolt holes are adapted to receive the bolts. The tower may comprise a flange having the bolt holes.

The mounting direction is the direction of movement by which mounting is achieved.

In particular, locking means are separate elements (separate from the bolts and corresponding nuts) which correspond to each other and are adapted to be joined in a detachable way. "Locking" is to say that relative movement in a direction opposite to the mounting direction is prevented by a positive fit between locking elements.

According to an embodiment, the locking means comprise a first element and a second element, wherein the first element is engaged in or behind the second element for locking the nacelle to the tower.

According to a further embodiment, the locking means are configured to be self-locking.

Self-locking means, that the step of locking is obtained without human intervention at least from within the tower, or without any human intervention at all.

According to a further embodiment, the locking means are spring loaded for self-locking.

In particular, spring loaded stands for loaded or secured by means of spring tension or compression.

According to a further embodiment, the locking means comprise an actuator, in particular an electromagnetic or hydraulic actuator.

The actuator may be remote controlled by a user outside the tower or fully automatic (using appropriate sensors).

According to a further embodiment, the nacelle has protruding elements protruding further in the mounting direction than the bolts, each of the protruding elements having one of the first or second element and the tower having the respective other one of the first or the second element. Advantageously, different combinations of first and second elements are conceivable as locking means for different installation situations.

According to a further embodiment, the protruding elements are configured as protruding bolts insertable in the holes by moving the nacelle and the tower towards each other in the mounting direction.

According to a further embodiment, the first or second element is spring loaded in a direction perpendicular to the mounting direction for engaging the respective other one of the first or second element.

According to a further embodiment, the actuator actuates the first or second element in a direction perpendicular to the mounting direction for engaging the respective other one of the first or second element.

Perpendicular means being at right angles to a given direction and preferably includes deviations from said direction of +/- 20 degrees, more preferably +/- 5 degrees.

According to a further embodiment, the first element is configured as at least one movable pin, and the second element is configured as a stopping surface for engaging the movable pin.

A stopping surface is a surface acting as a mechanical end stop.

According to a further embodiment, the first element is configured as a rotatable arm and the second element is configured as a stopping surface for stopping the rotatable arm.

In particular, rotatable denotes being able to turn on a pivot, i.e. a shaft or pin.

According to a further embodiment, the first element is a rotatable lobe and the second element is a corresponding engaging surface.

For example, a lobe may be a curved or rounded element, e.g. a cam-shaped element.

According to a further embodiment, the first element is a rotatable hook and the second element is a corresponding surface engageable by the hook.

For example, a hook may be a curved or bent element for catching or holding.

According to a further embodiment, the first element is a toothed element and the second element is a corresponding toothed element for meshing with the toothed element.

In particular, toothed means having pointed projections (teeth) on an edge or surface.

According to a further embodiment the nacelle comprises a first part of guiding means and the tower comprises a second part of guiding means. The first part and the second part of the guiding means are prepared and arranged in a way to abut on each other when the nacelle is mounted to the tower. Thereby the movement of the nacelle is limited in respect to the tower and the position of the nacelle in respect to the tower is influenced to allow the coupling arrangement to interact.

Thus the nacelle is easier and quicker to mount on the tower.

Any embodiment of the first aspect may be combined with any embodiment of the first aspect to obtain another embodiment of the first aspect.

According to a second aspect, a wind turbine comprising the coupling arrangement is provided.

Upon mounting, the nacelle to be mounted on the wind turbine is provisionally locked by such a coupling arrangement, disabling the nacelle to be retracted in the direction opposite to the mounting direction.

According to a third aspect, a method for assembling the coupling arrangement is provided. The method comprises the steps of a) moving the nacelle and the tower towards each other, b) locking the nacelle to the tower in the direction opposite to the mounting direction by use of the locking means, and c) fastening nuts to the bolts.

The embodiments and features described with reference to the arrangement of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

The invention is shown in more detail by the help of figures. The figures show a preferred configuration and do not limit the scope of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows, in a section view II-II from Fig. 1, a coupling arrangement according to an embodiment;
Fig. 3 shows an enlarged view III from Fig. 2;
Fig. 4 shows the enlarged bolt or first element 12, 14 in a locked state;
Figs. 5 to 18 show various embodiments of coupling arrangements; and
Fig. 19 shows a flow chart of a method according to an embodiment.

In the figures, like reference numerals designate like or functionally equivalent elements, unless otherwise indicated.

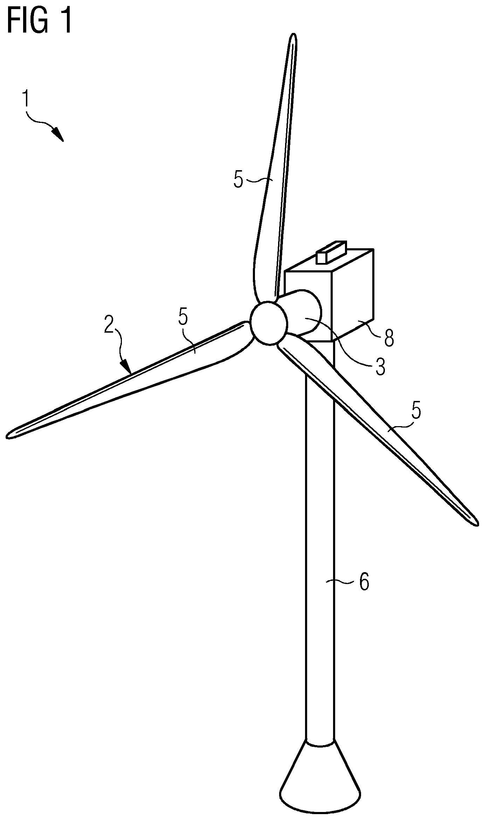

Fig. 1 shows a wind turbine 1 according to an embodiment.

The wind turbine 1 comprises a rotor 2 connected to a generator (not shown) arranged inside a nacelle 8. The nacelle 8 is arranged at the upper end of a tower 6 of the wind turbine 1 and is preferably rotatable around a rotational axis of the tower 6.

The rotor 2 comprises three blades 5, preferably with an adjustable pitch. The blades 5 are connected to a hub 3 of the wind turbine 1. Rotors 2 of this kind may have diameters ranging from, for example, 30 to 160 meters. The blades 5 are subjected to high wind loads. At the same time, the blades 5 need to be lightweight. For these reasons, blades 5 in modern wind turbines 1 are manufactured from fiber-reinforced composite materials.

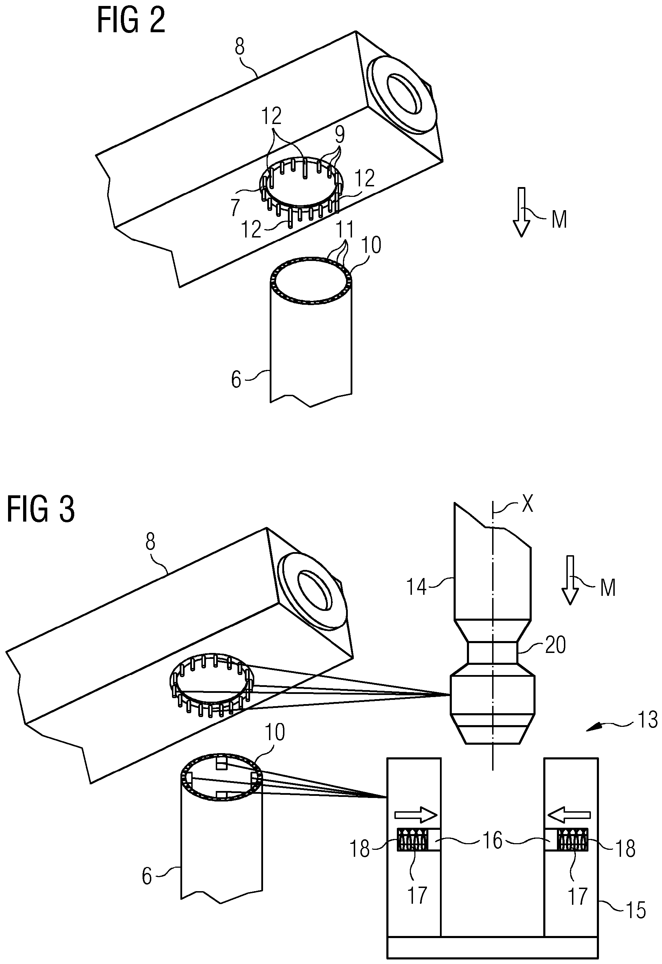

Fig. 2 shows, a process step during the assembly of the nacelle 8 to the tower 6 and thus the assembly of a coupling arrangement 7 according to an embodiment.

The coupling arrangement 7 comprises a nacelle 8 and bolts 9 extending from the nacelle 8. Further, the coupling arrangement 7 comprises the tower 6 having a flange 10. Parallel bolt holes 11 extend through the flange 10. In addition to the bolts 9, the nacelle 8 has protruding elements 12 protruding further in a mounting direction M than the bolts 9. In the present example, the protruding elements 12 are formed as parallel protruding bolts.

The coupling arrangement 7 further comprises locking means 13 shown in Fig. 3. The locking means 13 comprise first elements 14 and second elements 15.

In the present example, the second element 15 comprises pins 16 biased by respective springs 17 in a direction perpendicular to the protruding bolt axis X and the mounting direction M. The pins 16 and associated springs 17 are arranged in recesses 18 of the second element 15.

According to the present embodiment, the first element 14 comprise stopping surfaces at the area with the reduced diameter 20 which are engaged by the pins 16 in their extended position when the protruding bolt 14 retracts in a direction opposite to the mounting direction M.

In a process step prior to the process step shown in Fig. 2, the nacelle 8 is positioned relative to the tower 6 such that the bolts 9 and protruding bolts 12 are aligned with corresponding bolt holes 11, respectively.

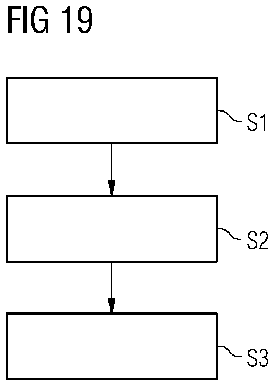

In a further step S1 (see Fig. 19), the nacelle 8 is moved towards the tower 6 in the mounting direction M. Then, the protruding bolts 14 enter respective bolt holes 15 on the outer side of the flange 10. As a result, the pins 16, initially in their extended position, are depressed. Then, the area of the bolt 12, 14 with the reduced diameter 20 arrives at the position of the pins 16 and the pins snap into their extended position (Fig. 3) due to the springs 17, i.e. without further human interaction (herein referred to as self-locking). As a result, the pins 16 together with the bolt 14 lock the nacelle 8 with respect to the tower 6 in a direction opposite the mounting direction M (step S2 in Fig. 19), i.e. the nacelle 8 cannot move further away from the tower 6 than the pins 16 and bolt 12, 14 allow.

The bolts 9 enter their corresponding bolt holes 11 shortly after the protruding bolts 12, 14. This is a result of the protruding bolts 12 being longer than the bolts 9, for example by 1 to 20 cm. The protruding bolts 12 provide guidance for the bolts 9 to be threaded into their corresponding bolt holes 7. At the point in time when the pins 16 snap into their extended position, the bolts 9 preferably also extend past the inside surface of the flange 10, i.e. the bolts 9 extend through and past the bolt holes 11.

Now, skilled personnel can safely enter the tower 6 and attach nuts to the ends of the bolts 9. Once the nuts are tightened in a step S3 (see Fig. 19), the nacelle 8 is securely attached to the tower 6.

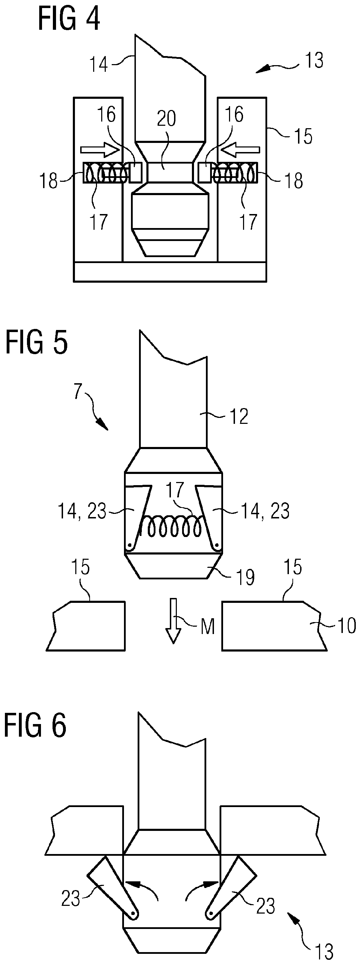

Fig. 4 shows the protruding bolt or first element 12, 14 in a locked state.

The protruding bolt 12 was received by the corresponding bolt hole. The pins 16 are pushed by the springs 17 from the recess 18 into the area with a reduced diameter 20 of the bolt 12. The bolt 12 is therefore locked in its position in the bolt hole by the pins 16.

In the following, different examples of coupling arrangements 7 are depicted, each of which comprising locking means 13 including at least one first element 14 and at least one second element 15 to be engaged with each other. Each of the depicted locking means 13 represents a way of locking protruding elements 12 of the nacelle 8 to the tower 6 in a direction opposite to the mounting direction M.

Figs. 5 and 6 show a section view of a further embodiment of a coupling arrangement 7 similar to the embodiment of Fig. 3. The protruding bolt 12 includes two rotatable arms 23 which are provided at the free end 19. The rotatable arms 23 are spring loaded by spring 17 in a direction perpendicular to the mounting direction M. In Fig. 5 the arms 23 are folded into the protruding bolt 12 (which usually occurs when the protruding bolt 12 enters the corresponding bolt hole 11). In Fig. 6 the arms 23 are unfolded laterally and engaged with the stopping surfaces 15 at the flange 10 after the free end 19 of the protruding bolt 12 exits from the bolt hole 11.

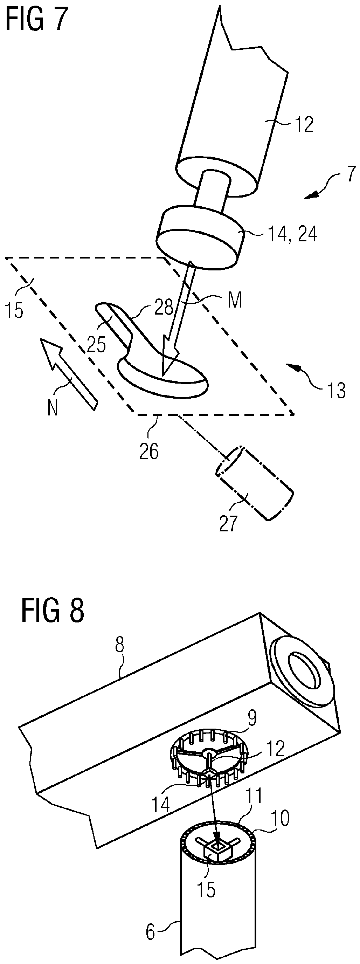

Fig. 7 shows a sectional view of a further embodiment of a coupling arrangement 7.

The protruding bolt 12 has an extension 24 with a T-shaped cross-section. Once the extension 24 exits the corresponding bolt hole 11 (see e.g. Fig. 1) and has passed through a key hole 25 in a plate 26, plate 26 is moved by an actuator 27, e.g. an electromagnet, in a direction N perpendicular to the mounting direction M such that a stopping surface 15 of the plate 26 bordering on a portion 28 having a reduced breadth of the keyhole 25 engages the extension 24. The plate 26 is supported such in the tower 6 or at the flange 10 that it can be moved in the direction N but is fixed in the direction opposite to the mounting direction M. The actuator 27 may be configured to be controlled by a user from remote, in particular from outside the tower 6. Further, the actuator 27 may work fully automatically - to this end, the actuator 27 may comprise a sensor for sensing the presence of the protruding bolt 12. When sensing the protruding bolt 12, the actuator moves the plate 26 without any human intervention. These principles apply to all actuators mentioned herein.

Fig. 8 shows a further embodiment of a coupling arrangement 7.

Fig. 8 shows a coupling arrangement 7. The protruding element 12 comprises a first element 14 and is arranged at the nacelle 8 within the ring of bolts 9 that are prepared to interact with the holes 11 in the flange 10.

The first element 14 comprises a square shaped part, and the second element 15 comprises a square shaped opening. The square shaped opening of the second element 15 corresponds in size to the square shaped part of the first element 14, so that the square shaped element can be moved through the square shaped opening.

After an even small rotation of the first element 14 in respect to the second element 15 the coupling arrangement 7 is locked, and the nacelle can't be moved away from the tower in the opposite direction to the mounting direction.

The first element 14 protrudes longer from the nacelle 8 than the bolts 9. Thus the first element 14 can be locked with the second element 15, and thereafter the bolts 9 are introduced in the bolt holes 11 of the flange 10.

To lock the coupling arrangement, either the first element 14 can be rotated in respect to the second element 15, or vice versa.

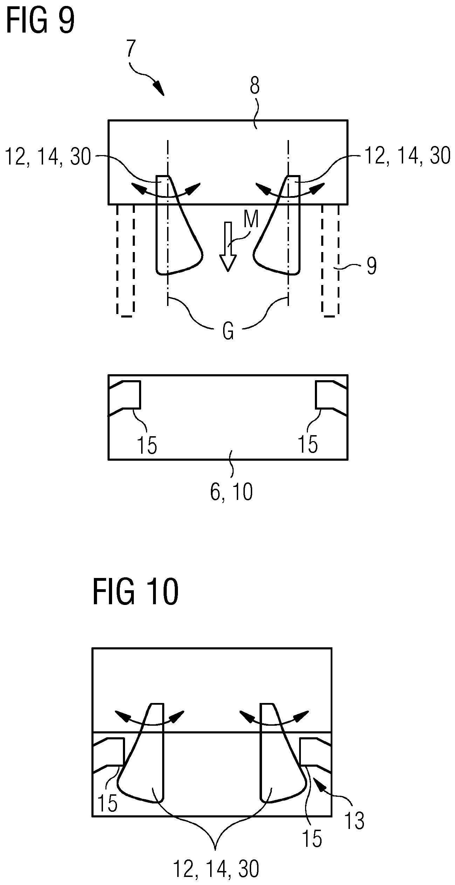

Figs. 9 and 10 show section views of a further embodiment of a coupling arrangement 7.

The protruding elements 12 are formed as lobes 30 respectively held rotatably about an axis G (the axis G being orientated parallel to the mounting direction M) at the nacelle 8. Protruding bolts 12 are not required in this example but may be provided. Once the nacelle 8 has been moved towards the tower 6 in the mounting direction M to an extent where the bolts 9 have passed through corresponding bolt holes 11 (not shown), the lobes 30 are rotated (by an actuator, not shown) about respective axes G upon which they become respectively engaged with stopping surfaces provided at the tower 6 or the flange 10. Thus, the lobes 30 in cooperation with the stopping surfaces prevent the nacelle 8 from retracting in a direction opposite the mounting direction M.

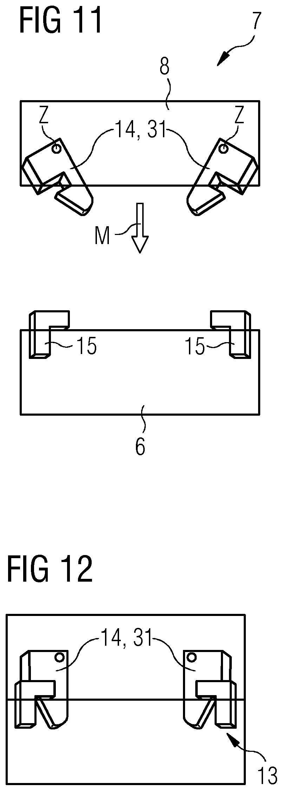

The embodiment of Figs. 11 and 12 is similar to Figs. 9 and 10.

Hooks 31 are respectively provided rotatably about an axis Z perpendicular to the mounting direction M at the nacelle 8. Once the nacelle 8 has been moved towards the tower 6 in the mounting direction M to an extent where the bolts 9 have passed through corresponding bolt holes 11 (not shown), the hooks 31 are rotated about the axes Z and become engaged with stopping or engaging surfaces at the tower 6 or flange 10.

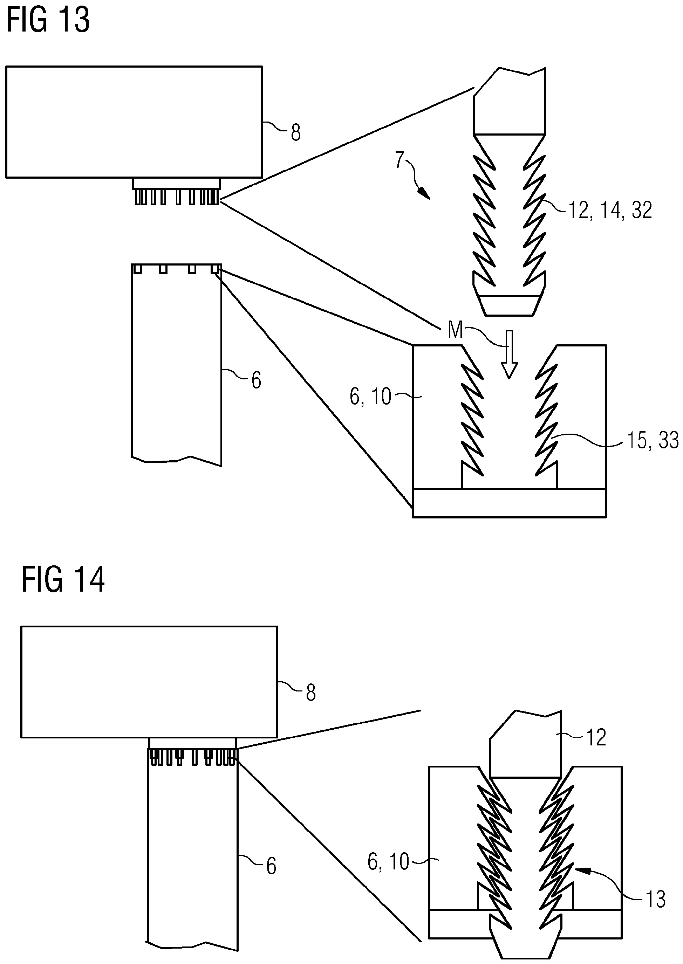

Figs. 13 und 14 illustrate an embodiment of a coupling arrangement 7, wherein a protruding bolt 12 is provided with teeth 32 (first element) which become engaged with corresponding teeth 33 (second element) at the tower 6 or the flange 10 once the nacelle 8 has been moved towards the tower 6 in the mounting direction M to an extent where the bolts 9 have passed through corresponding bolt holes 11.

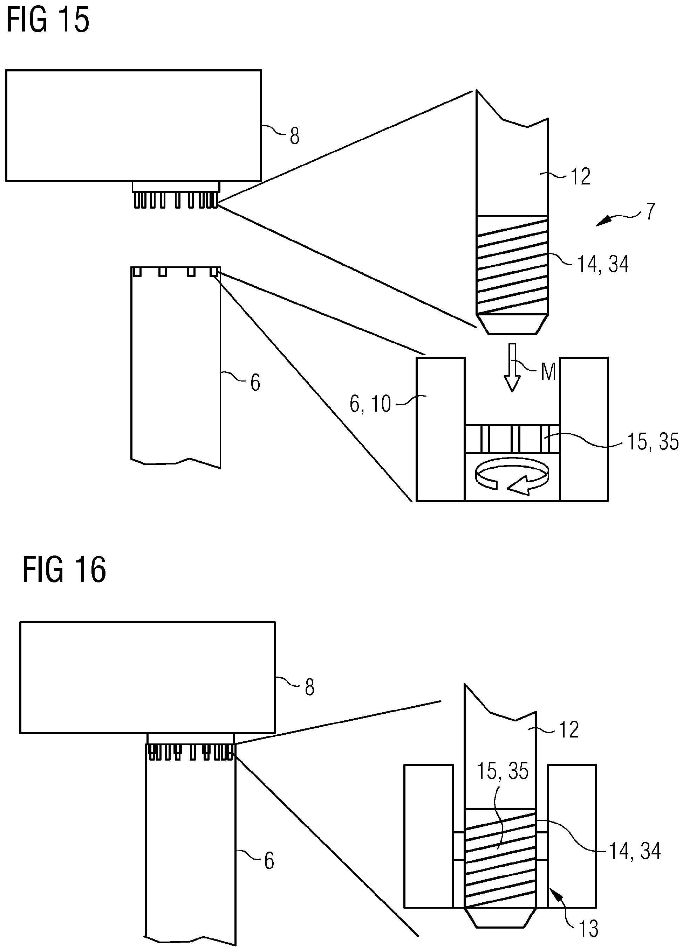

Figs. 15 und 16 illustrate an embodiment of a coupling arrangement 7, wherein a protruding bolt 12 is provided with a threaded portion 34 (first element) which is engaged by a nut 35 (second element) provided at the tower 6 or at the flange 10 once the nacelle 8 has been moved towards the tower 6 in the mounting direction M to an extent where the bolts 9 have passed through corresponding bolt holes 11. The nut 35 may be rotated by an actuator (not shown) for engagement with the threaded portion 34.

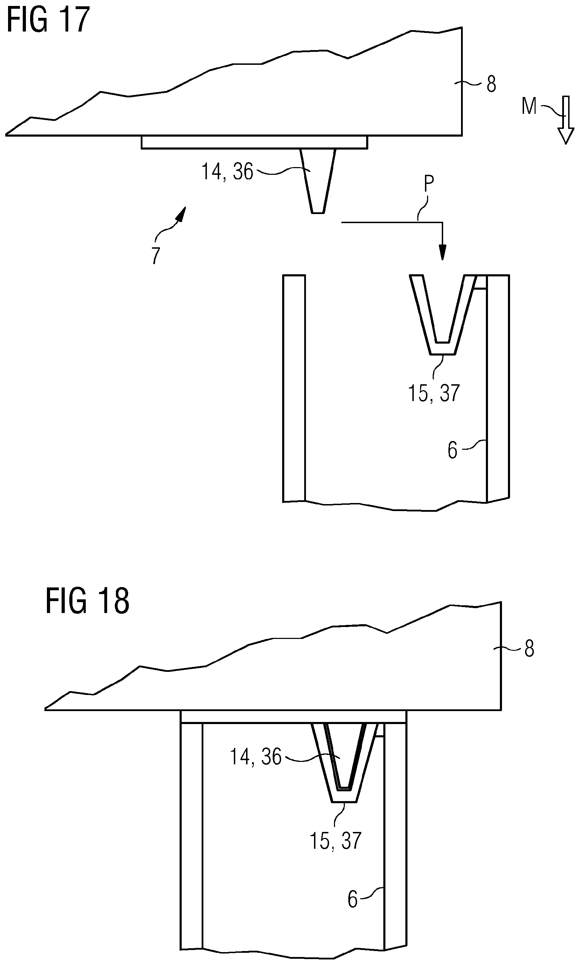

In the embodiment of Figs. 17 and 18 the coupling arrangement 7 comprises a nacelle 8 having a V-shaped element 36 (first element) and a tower 6 having a corresponding V-shaped recess 37 (second element). The V-shaped element 36 is moved along path P to become engaged with the corresponding V-shaped recess 37 once the nacelle 8 has been moved towards the tower 6 in the mounting direction M to an extent where the bolts 9 have passed through corresponding bolt holes 11.

Although the present invention has been described in accordance with preferred embodiments, it is obvious for the person skilled in the art that modifications are possible in all embodiments. The illustration in the drawings is in schematic form. It is noted that in different figures, similar or identical elements are provided with the same reference signs.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. A coupling arrangement (7) in the field of wind turbines comprising
- a nacelle (8) having a plurality of first bolts (9),
- a tower (6) having a plurality of bolt holes (11), the bolts (9) being insertable in the bolt holes (11) by moving the nacelle (8) and the tower (6) towards each other in a mounting direction (M), and
- locking means (13) for locking the nacelle (8) to the tower (6) in a direction opposite to the mounting direction (M),
- wherein the locking means (13) comprise a first element (14) and a second element (15), wherein the first element (14) is engageable in or behind the second element (15) for locking the nacelle (8) to the tower (6),
- wherein the nacelle (8) comprises a protruding element (12) protruding further in the mounting direction than the first bolts (9), each of the protruding elements (12) having one of the first or the second element (14, 15) of the locking means (13) and the tower (6) having the respective other one of the first or the second element (14, 15) of the locking means (13).
- wherein the protruding elements (12) are configured as protruding second bolts insertable in the holes (11) by moving the nacelle (8) and the tower (6) towards each other in the mounting direction (M).

2. The coupling arrangement (7) according to claim 1, wherein the locking means (13) are configured to be self-locking.

3. The coupling arrangement (7) according to claim 2, wherein the locking means (13) are spring loaded (17) for self-locking.

4. The coupling arrangement (7) according to claim 1 or 2, wherein the locking means (13) comprise an actuator (27), in particular an electromagnetic or hydraulic actuator.

5. The coupling arrangement (7) according to one of claims 2 - 4, wherein the first or second element (14, 15) is spring loaded (17) in a direction perpendicular to the mounting direction (M) for engaging the respective other one of the first or second element (14, 15).

6. The coupling arrangement (7) according to one of claims 4 - 5, wherein the actuator (27) actuates the first or second element (14, 15) in a direction perpendicular to the mounting direction (M) for engaging the respective other one of the first or second element (14, 15).

7. The coupling arrangement (7) according to one of claims 2 - 6, wherein the first element (14) is configured as at least one movable pin (16), and the second element (15) is configured as a stopping surface for engaging the movable pin (16).

8. The coupling arrangement (7) according to one of claims 2 - 6, wherein the first element (14) is configured as a rotatable arm (23) and the second element (15) is configured as a stopping surface for engaging the rotatable arm (23).

9. The coupling arrangement (7) according to one of claims 2 - 6, wherein the first element (14) is a rotatable lobe (30) and the second element is a corresponding engaging surface.

10. The coupling arrangement (7) according to one of claims 2 - 6, wherein the first element (14) is a rotatable hook (31) and the second element is a corresponding surface engageable by the hook (31) or wherein the first element (14) is a toothed element (32) and the second element (15) is a corresponding toothed element (33) for meshing with the toothed element (32).

11. The coupling arrangement (7) according to one of the preceding claims, wherein the nacelle comprises a first part of guiding means, and the tower comprises a second part of guiding means, whereby the first part and the second part of the guiding means are prepared and arranged in a way to abut on each other when the nacelle is mounted to the tower, to limit the movement of the nacelle in respect to the tower and to influence the position of the nacelle in respect to the tower to allow the first element (14) and the second element (15) of the coupling arrangement to interact.

12. A wind turbine (1) comprising the coupling arrangement (7) of one of claims 1 - 11.

13. A method for assembling the coupling arrangement (7) of one of claims 1 - 11, comprising the steps of
- moving the nacelle (8) and the tower (6) towards each other,
- locking the nacelle (8) to the tower (6) in the direction opposite to the mounting direction (M) by use of the locking means (13), and
- fastening nuts to the bolts (9).

14. Method according to claim 13 for assembling the coupling arrangement (7) of one of claims 1 - 11, comprising the additional step of
- abutting the first part of the guiding means on the second part of the guiding means to limit the movement of the nacelle in respect to the tower and to adjust the position of the nacelle for the coupling means to interact.

## Patentansprüche

1. Verbindungsanordnung (7) auf dem Gebiet von Windenergieanlagen (1), die Folgendes umfasst:
- eine Gondel (8) mit mehreren ersten Bolzen (9),
- einen Turm (6) mit mehreren Bolzenlöchern (11), wobei sich die Bolzen (9) in die Bolzenlöcher (11) einführen lassen, indem die Gondel (8) und der Turm (6) in einer Befestigungsrichtung (M) aufeinander zu bewegt werden, und
- Verriegelungsmittel (13) zum Verriegeln der Gondel (8) in einer der Befestigungsrichtung (M) entgegengesetzten Richtung an dem Turm (6),
- wobei die Verriegelungsmittel (13) ein erstes Element (14) und ein zweites Element (15) umfassen, wobei das erste Element (14) zum Verriegeln der Gondel (8) am Turm (6) in das zweite Element (15) oder dahinter eingreifen kann,
- wobei die Gondel (8) ein vorstehendes Element (12) umfasst, das in Befestigungsrichtung weiter vorsteht als die ersten Bolzen (9), wobei jedes der vorstehenden Elemente (12) das erste oder das zweite Element (14, 15) der Verriegelungsmittel (13) und der Turm (6) das jeweils andere Element (14, 15) der Verriegelungsmittel (13) aufweist,
- wobei die vorstehenden Elemente (12) als vorstehende zweite Bolzen konfiguriert sind, die sich in die Löcher (11) einführen lassen, indem die Gondel (8) und der Turm (6) in Befestigungsrichtung (M) aufeinander zu bewegt werden.

2. Verbindungsanordnung (7) nach Anspruch 1, wobei die Verriegelungsmittel (13) so konfiguriert sind, dass sie sich selbst sichern.

3. Verbindungsanordnung (7) nach Anspruch 2, wobei die Verriegelungsmittel (13) zum Selbstsichern federbelastet (17) sind.

4. Verbindungsanordnung (7) nach Anspruch 1 oder 2, wobei die Verriegelungsmittel (13) ein Stellglied (27), insbesondere ein elektromagnetisches oder hydraulisches Stellglied, umfassen.

5. Verbindungsanordnung (7) nach einem der Ansprüche 2 bis 4, wobei das erste oder das zweite Element (14, 15) zum Eingreifen in das jeweils andere Element (14, 15) in einer zur Befestigungsrichtung (M) senkrechten Richtung federbelastet (17) ist.

6. Verbindungsanordnung (7) nach einem der Ansprüche 4 und 5, wobei das Stellglied (27) das erste oder das zweite Element (14, 15) zum Eingreifen in das jeweils andere Element (14, 15) in einer zur Befestigungsrichtung (M) senkrechten Richtung betätigt.

7. Verbindungsanordnung (7) nach einem der Ansprüche 2 bis 6, wobei das erste Element (14) als mindestens ein beweglicher Stift (16) und das zweite Element (15) als Anschlagfläche zum Anliegen des beweglichen Stifts (16) konfiguriert ist.

8. Verbindungsanordnung (7) nach einem der Ansprüche 2 bis 6, wobei das erste Element (14) als drehbarer Arm (23) und das zweite Element (15) als Anschlagfläche zum Anliegen des drehbaren Arms (23) konfiguriert ist.

9. Verbindungsanordnung (7) nach einem der Ansprüche 2 bis 6, wobei es sich bei dem ersten Element (14) um eine drehbare Nase (30) und bei dem zweiten Element um eine entsprechende Anlagefläche handelt.

10. Verbindungsanordnung (7) nach einem der Ansprüche 2 bis 6, wobei es sich bei dem ersten Element (14) um einen drehbaren Haken (31) und bei dem zweiten Element um eine entsprechende Fläche handelt, in die der Haken (31) eingreifen kann, oder wobei es sich bei dem ersten Element (14) um ein verzahntes Element (32) und bei dem zweiten Element (15) um ein zum Eingreifen in das verzahnte Element (32) entsprechend verzahntes Element (33) handelt.

11. Verbindungsanordnung (7) nach einem der vorhergehenden Ansprüche, wobei die Gondel einen ersten Teil Führungsmittel und der Turm einen zweiten Teil Führungsmittel umfasst, wobei der erste und der zweite Teil Führungsmittel so ausgelegt und angeordnet sind, dass sie aneinander anliegen, wenn die Gondel an dem Turm angebracht ist, und so die Bewegung der Gondel in Bezug auf den Turm einschränken und die Position der Gondel in Bezug auf den Turm beeinflussen, damit das erste Element (14) und das zweite Element (15) der Verbindungsanordnung zusammenwirken können.

12. Windenergieanlage (1) mit der Verbindungsanordnung (7) nach einem der Ansprüche 1 bis 11.

13. Verfahren zum Zusammenbauen der Verbindungsanordnung (7) nach einem der Ansprüche 1 bis 11 mit folgenden Schritten:
- Aufeinanderzubewegen der Gondel (8) und des Turms (6),
- Verriegeln der Gondel (8) an dem Turm (6) in der der Befestigungsrichtung (M) entgegengesetzten Richtung mithilfe der Verriegelungsmittel (13) und
- Befestigen von Muttern an den Bolzen (9).

14. Verfahren nach Anspruch 13 zum Zusammenbauen der Verbindungsanordnung (7) nach einem der Ansprüche 1 bis 11 mit folgendem zusätzlichem Schritt:
- Anlegen des ersten Teils Führungsmittel an den zweiten Teil Führungsmittel zum Einschränken der Bewegung der Gondel in Bezug auf den Turm und zum Justieren der Position der Gondel für das Zusammenwirken der Verbindungsmittel.

## Revendications

1. Agencement de couplage (7) dans le domaine des éoliennes comprenant
- une nacelle (8) ayant une pluralité de premiers boulons (9),
- un mât (6) ayant une pluralité de trous de boulon (11), les boulons (9) étant insérables dans les trous de boulon (11) en déplaçant la nacelle (8) et le mât (6) l'un vers l'autre dans une direction de montage (M), et
- des moyens de verrouillage (13) destinés à verrouiller la nacelle (8) au mât (6) dans une direction opposée à la direction de montage (M),
- dans lequel les moyens de verrouillage (13) comprennent un premier élément (14) et un second élément (15), dans lequel le premier élément (14) peut être mis en prise dans ou derrière le second élément (15) pour verrouiller la nacelle (8) au mât (6),
- dans lequel la nacelle (8) comprend un élément en saillie (12) faisant saillie davantage dans la direction de montage que les premiers boulons (9), chacun des éléments en saillie (12) ayant l'un du premier ou du second élément (14, 15) des moyens de verrouillage (13) et le mât (6) ayant l'autre élément respectif du premier ou du second élément (14, 15) des moyens de verrouillage (13),
- dans lequel les éléments en saillie (12) sont configurés en tant que seconds boulons en saillie insérables dans les trous (11) en déplaçant la nacelle (8) et le mât (6) l'un vers l'autre dans la direction de montage (M).

2. Agencement de couplage (7) selon la revendication 1, dans lequel les moyens de verrouillage (13) sont configurés pour s'auto-verrouiller.

3. Agencement de couplage (7) selon la revendication 2, dans lequel les moyens de verrouillage (13) sont actionnés par ressort (17) pour s'auto-verrouiller.

4. Agencement de couplage (7) selon la revendication 1 ou 2, dans lequel les moyens de verrouillage (13) comprennent un actionneur (27), en particulier un actionneur électromagnétique ou hydraulique.

5. Agencement de couplage (7) selon l'une des revendications 2 à 4, dans lequel le premier ou le second élément (14, 15) est actionné par ressort (17) dans une direction perpendiculaire à la direction de montage (M) pour se mettre en prise avec l'autre élément respectif du premier ou du second élément (14, 15).

6. Agencement de couplage (7) selon l'une des revendications 4 et 5, dans lequel l'actionneur (27) actionne le premier ou le second élément (14, 15) dans une direction perpendiculaire à la direction de montage (M) pour se mettre en prise avec l'autre élément respectif du premier ou du second élément (14, 15).

7. Agencement de couplage (7) selon l'une des revendications 2 à 6, dans lequel le premier élément (14) est configuré en tant qu'au moins une broche mobile (16), et le second élément (15) est configuré en tant que surface de butée pour se mettre en prise avec la broche mobile (16).

8. Agencement de couplage (7) selon l'une des revendications 2 à 6, dans lequel le premier élément (14) est configuré en tant que bras rotatif (23) et le second élément (15) est configuré en tant que surface de butée destinée à se mettre en prise avec le bras rotatif (23).

9. Agencement de couplage (7) selon l'une des revendications 2 à 6, dans lequel le premier élément (14) est un lobe rotatif (30) et le second élément est une surface de mise en prise correspondante.

10. Agencement de couplage (7) selon l'une des revendications 2 à 6, dans lequel le premier élément (14) est un crochet rotatif (31) et le second élément est une surface correspondante qui peut être mise en prise par le crochet (31) ou dans lequel le premier élément (14) est un élément denté (32) et le second élément (15) est un élément denté (33) correspondant destiné à s'engrener avec l'élément denté (32).

11. Agencement de couplage (7) selon l'une des revendications précédentes, dans lequel la nacelle comprend une première partie de moyens de guidage, et le mât comprend une seconde partie de moyens de guidage, moyennant quoi la première partie et la seconde partie des moyens de guidage sont préparées et agencées de façon à se mettre en butée l'une contre l'autre lorsque la nacelle est montée sur le mât, à limiter le mouvement de la nacelle par rapport au mât et à influencer la position de la nacelle par rapport au mât pour permettre au premier élément (14) et au second élément (15) de l'agencement de couplage d'interagir.

12. Eolienne (1) comprenant l'agencement de couplage (7) selon l'une des revendications 1 à 11.

13. Procédé destiné à assembler l'agencement de couplage (7) selon l'une des revendications 1 à 11, comprenant les étapes:
- déplacer la nacelle (8) et le mât (6) l'un vers l'autre,
- verrouiller la nacelle (8) sur le mât (6) dans la direction opposée à la direction de montage (M) au moyen de l'utilisation des moyens de verrouillage (13), et
- fixer des écrous aux boulons (9).

14. Procédé selon la revendication 13 destiné à assembler l'agencement de couplage (7) selon l'une des revendications 1 à 11, comprenant l'étape supplémentaire:
- mettre en butée la première partie des moyens de guidage sur la seconde partie des moyens de guidage pour limiter le mouvement de la nacelle par rapport au mât et pour ajuster la position de la nacelle pour que les moyens de couplage interagissent.
